(19) Europäisches Patentamt
European Patent Office
Office européen des brevets

(11) **EP 1 491 900 B1**

(12) **EUROPEAN PATENT SPECIFICATION**

(45) Date of publication and mention
of the grant of the patent:
**16.06.2010 Bulletin 2010/24**

(51) Int Cl.:
***G01P 13/02*** *(2006.01)*  ***G01P 5/165*** *(2006.01)*

(21) Application number: **04253847.0**

(22) Date of filing: **28.06.2004**

(54) **Multi-function air data sensing probe having an angle of attack vane**

Multifunktions-Luftdatensensor mit Schwenkflügel-Anstellwinkelsensor

Capteur multifonctionnel de paramètres aérodynamiques ayant un capteur de l'angle d'attaque avec palette mobile

(84) Designated Contracting States:
**DE FR GB**

(30) Priority: **26.06.2003 US 606929**

(43) Date of publication of application:
**29.12.2004 Bulletin 2004/53**

(73) Proprietor: **ROSEMOUNT AEROSPACE INC.**
**Burnsville, MN 55337 (US)**

(72) Inventors:
 • **Seidel, Greg A.**
  **Farmington, Minesota 55024 (US)**
 • **Cronin, Dennis J.**
  **Shakopee, Minnesota 55379 (US)**
 • **Mette, John H.**
  **Faribault, Minnesota 55021 (US)**
 • **Koosmann, Mark R.**
  **Corcoran, Minnesota 55340 (US)**
 • **Schmitz, James A.**
  **Eagan, Minnesota 55123 (US)**
 • **Fedele, John R.**
  **Burnsville, Minnesota 55337 (US)**
 • **Kromer, Dana A.**
  **Minnetonka, Minnesota 55345 (US)**

(74) Representative: **Cross, Rupert Edward Blount et al**
**Boult Wade Tennant**
**Verulam Gardens**
**70 Gray's Inn Road**
**London WC1X 8BT (GB)**

(56) References cited:
WO-A-99/61924     US-A- 2 850 896
US-A- 3 665 760    US-A- 5 423 209
US-A- 5 731 507    US-A1- 2003 051 546
US-B1- 6 419 186   US-B1- 6 490 510

**Description**

BACKGROUND OF THE INVENTION

The present invention relates to a multi-function probe for mounting on air vehicles which incorporates a plurality of air data sensors in one probe body, including a vane type angle of attack sensor to reduce the number of projecting struts and probes from an air vehicle surface, thereby saving weight, and reducing drag.

In the past, multi-function probes that sense pressure parameters comprising static pressure, pitot pressure, and total temperature, have been advanced. These probes also included ports that were located so that angle of attack could be determined due to pressure differentials at the selected ports.

U.S. Patent No. 5,731,507 discloses an air data sensing probe that senses pitot pressure, and static pressure, and include a total temperature sensor. The probe disclosed in this patent also has angle of attack pressure sensing ports that are located on a common plane on opposite sides of the probe. Angle of attack is determined by pressure differentials at such ports. A similar sensor mounted on a rotable vane is disclosed in US 2003/0051546.

Angle of attack sensors that have a vane mounted to pivot on a cylindrical probe about an axis generally perpendicular to the central axis of the probe are known. For example, US Patent No. 3,882,721 illustrates such a vane type sensor mounted directly to the skin of an air vehicle.

A total air temperature measurement probe using digital compensation circuitry is disclosed in US Patent No. 6,543,298.

SUMMARY OF THE INVENTION

The present invention provides a multi-function air data sensing probe according to claim 1.

The present invention relates to an air data sensing probe assembly that includes a plurality of air data sensors integrated into a single, line replaceable probe unit. The probe has a low drag strut or support housing supported on an air vehicle surface and projecting laterally into the air stream. The strut supports a pitot pressure sensing tube or head, a total air temperature sensor with associated ducting in the strut, as well as static pressure sensing ports on the side surfaces of the probe. The strut further mounts a rotatable vane angle of attack sensor. Thus, pitot pressure ($P_t$), static pressure ($P_s$), total air temperature (TAT), and angle of attack (AOA) are all measured in a single unit.

The probe assembly provides the benefits of a vane type angle of attack sensor, but does not require calculations based on sensed differential pressures, although, as disclosed, sensed differential pressures are available for redundancy. A rugged probe that will accurately sense pressures and also provide accurate and reliable angle of attack indications is provided.

The sensors are arranged so there is little interference with the inlet scoop for the total temperature sensor passageways. Additionally, an air data computer is mounted directly to the mounting plate for the air data sensor probe assembly so that all sensors, signal conditioning circuits, and all calculations along with the necessary readout signals can be provided from a single package that can be easily removed and replaced for service. In other words, the multi-function probe is a smart probe that provides all needed air data information for high performance aircraft.

On-board processors also can be used for the calculations, if desired.

BRIEF DESCRIPTION OF THE DRAWINGS

Figure 1 is a front perspective view of a multi-function probe made according to the present invention in place on a side of an air vehicle;
Figure 2 is a sectional view of the multi-function probe taken along line 2--2 in Figure 1;
Figure 3 is an enlarged sectional view of the probe assembly along line 2--2 with parts removed and partially broken away;
Figure 4 is a sectional view taken on line 4--4 in Figure 2;
Figure 5 is a sectional view taken on line 5--5 in Figure 2; and
Figure 6 is a sectional view taken as on line 6--6 in Figure 2.

DETAILED DESCRIPTION OF THE PREFERRED EMBODIMENTS

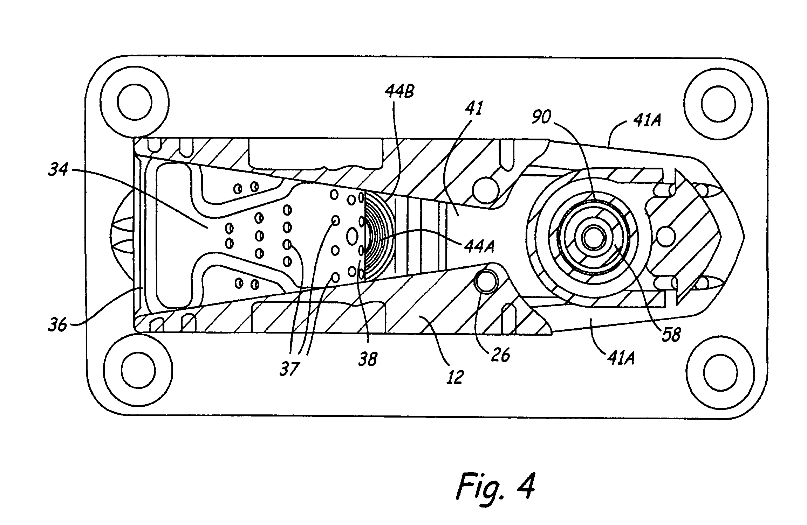

A multi-function probe assembly indicated generally at 10 includes a strut 12 that is generally airfoil shaped in cross section as shown in Figures 4-6. The strut 12 is supported on a mounting plate 14. The mounting plate 14 in turn is adapted to be mounted in place on the skin of an aircraft 16.

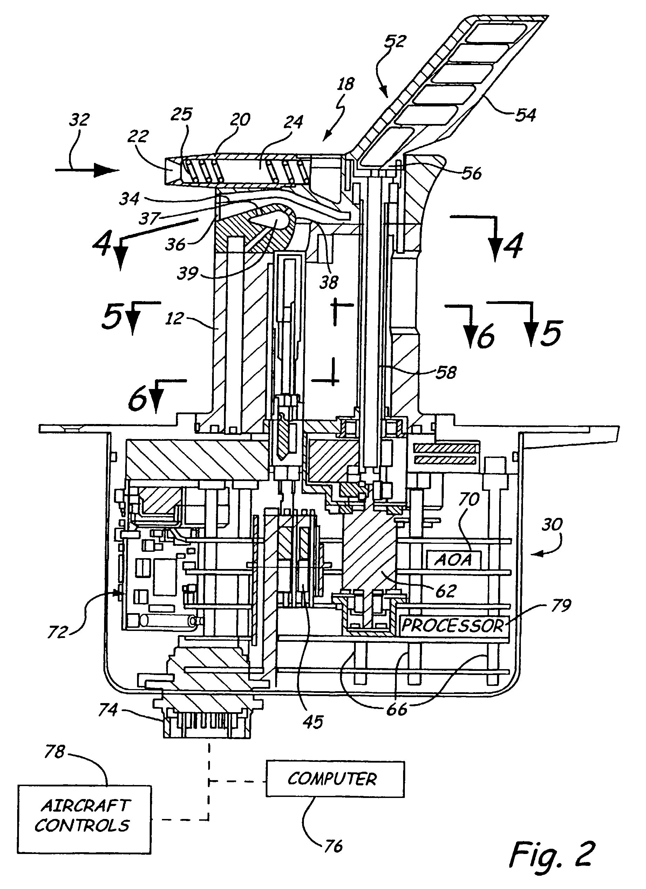

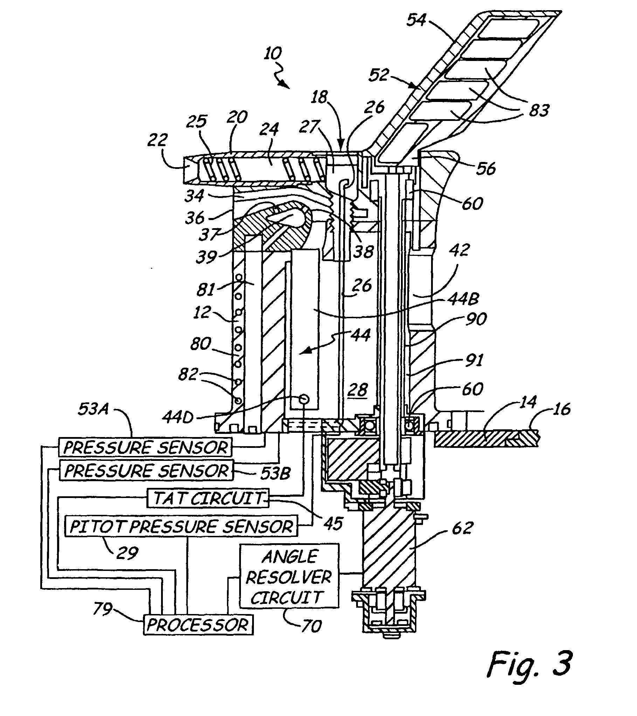

The multi-function probe strut 12 supports a multi-function sensing head assembly 18 at its outer end. This head assembly 18 includes a pitot pressure sensing tube 20 which has a forward pitot pressure sensing port 22, and as can be seen in Figures 2 and 3, the tube has an interior passageway 24 in which a suitable de-icing heater 25 is mounted.

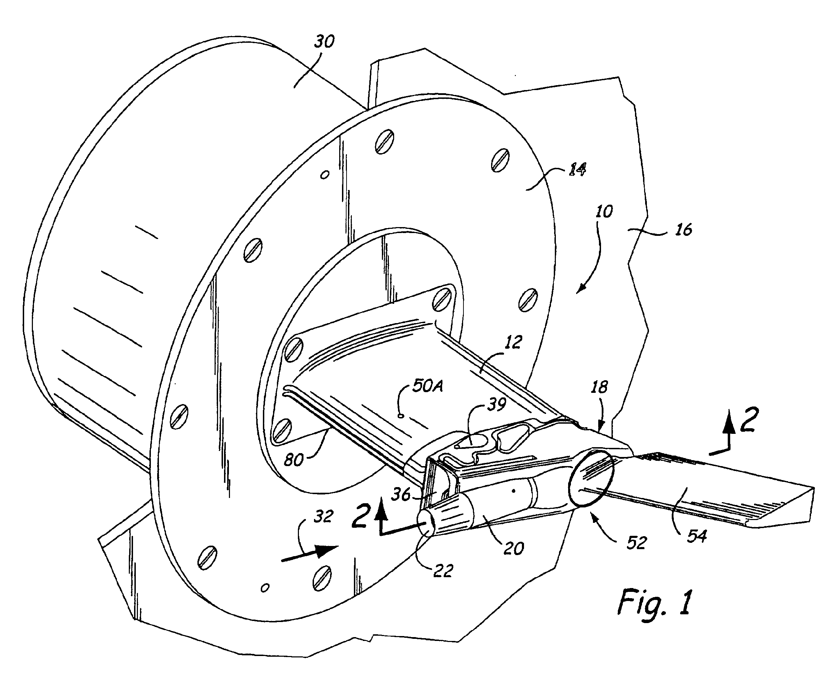

The base end of the pitot sensing pressure tube is open to a chamber 27, and a tube or line 26 opens to the pitot pressure chamber 27. The tube 26 passes through provided openings and across a chamber 28. The tube 26 is connected to a pitot pressure sensor 29 in an instrument or circuitry package indicated generally at 30 (Figures 1 and 2).

The sensor head assembly 18 is supported sufficiently outward from the aircraft skin 16, so it is outside a boundary layer of air on the skin, and is in substantially free stream conditions, insofar as airflow past the probe is concerned. The airflow direction is indicated by arrow 32. The pitot pressure sensing port 22 faces upstream.

Adjacent to and below the pitot pressure sensing tube 22, the sensor head 18 has a duct 34 comprising a total air temperature sensor inlet scoop with a wide inlet scoop opening 36 facing upstream. It can be seen that this inlet scoop opening 36 is positioned outside the boundary layer of air on the aircraft skin.

The duct 34 forms a curved flow path providing inertial separation of large particles from the air stream. The duct 34 is shaped to cause part of the air flow to turn substantially 90 degrees around a rounded surface of a wall portion 38. The wall portion 38 is provided with openings 37 to bleed off the boundary layer air into a cross channel 39 prior to where the flow enters a flow throat 40 that leads to chamber 28 in which a total air temperature sensor 44 is mounted. The boundary layer bleed air passing through openings 37 is discharged laterally through side openings that bleed or exhaust air from cross channel 39, as shown in Figures 1 and 2.

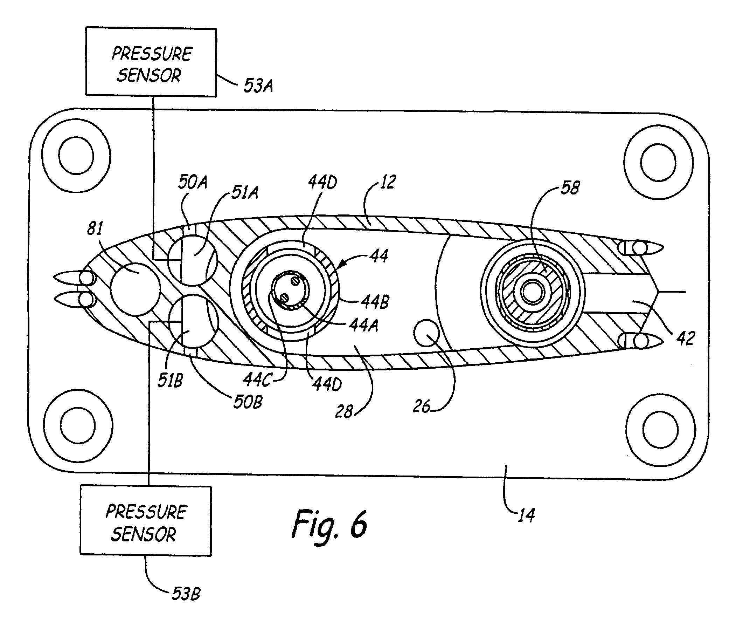

The total air temperature sensor 44 is preferably a sealed platinum resistance element in an outer case 44A through which the air from throat 40 flows as shown in Figures 4 and 6. The outer case 44A for the total temperature sensor is tubular, as is an outer shield 44B, as shown in Figure 3. The outer case 44A and outer shield 44B have outlet openings 44C and 44D (see Figure 6) so the air flowing past the total air temperature discharges into chamber 28 and out a rear port 42, which is at a lower pressure region, such as at the rear of the strut. Any suitable known total air temperature sensor can be used. The temperature sensor 44 is connected to read out circuitry 45 in the instrument package 30.

The curved wall 38, and the flow of part of the air into throat 40, results in inertial separation of larger particles, such as liquid particles, so that part of the air flow, and the larger particles, enter a discharge passageway 41 (Figure 6) that open to a lower pressure region of the strut through one or more ports 41A. The air that enters passageway 41, as shown, discharges toward the rear and laterally of the sensing head 18. The ports 41A are positioned so the air being discharged does not affect other measurement or sensing functions of the probe.

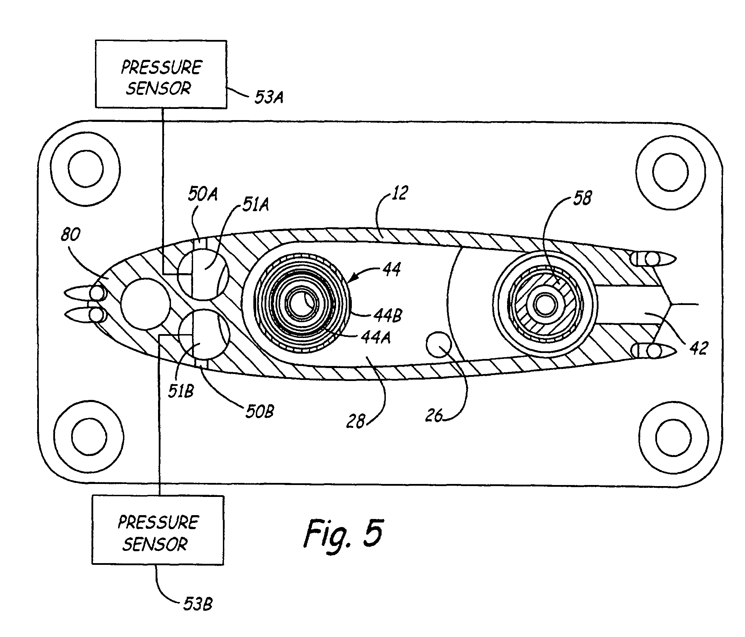

Static pressure sensing ports 50A and 50B (Figures 1 and 5) are provided on the top and bottom walls of the strut 12 The ports 50A and 50B open to passageways 51A and 51B in the strut (Figures 5 and 6). The passageways 51A and 51B are connected to separate pressure sensors 53A and 53B in the instrument package 30 (see Figures 5 and 6), and static pressure will be sensed as the probe moves with the aircraft through an air stream. Thus, the pressure signal from each port 50A, 50B are individually provided as electrical signals, and the signals can be averaged, as well as subtracted, for calculation of angle of attack, if desired.

In order to provide a direct and primary measurement of angle of attack of an aircraft on which probe 10 is mounted, a vane type angle of attack sensor 52 is provided. The ability to calculate angle of attack from pressure measurements provides redundancy of measurement, and can provide supplemental information.

The sensor 52 includes a vane 54 mounted onto a hub 56, which in turn is attached to a shaft 58. The shaft 58 is mounted in suitable bearings 60, for free rotation about the shaft axis. The inner end of the shaft 58 extends into the instrument package 30 on an interior of the aircraft and is coupled to a conventional angle resolver 62 that senses the rotational movement of the vane 54 about the axis of the shaft 58 to determine changes in the vane angle relative to the strut 12 and aircraft. The changes in vane angle result from changes in the angle of attack of the air vehicle or aircraft 16. The strut 12 is fixed to the aircraft, and the shaft 58 rotates in the strut 12 as the relative angle of attack changes.

The instrument package 30 includes the angle resolver 62 coupled to the shaft 58, and suitable readout circuitry, used on existing angle of attack vanes. This can be any desired type of angle resolver, such as that shown in the prior art, and known in the trade.

The other circuit components making up the instrument package 30 comprise circuit boards of cards mounted on standoff posts 66, that are attached to the strut mounting plate 14. A circuit card that has solid state pressure sensors for sensors 29, 53 and 53B, as well as the angle resolver circuit card 70 for the resolver 62. The pressure sensing condition circuitry can also be mounted on one or more of these circuit cards.

Various other circuit cards can be included, such as those shown at 72 for providing the necessary power supply, heater controls, and communication circuitry. The circuits connect through a single fitting 74 to an onboard computer 76, or, alternatively directly to aircraft controls 78. In addition, a processor 79 for computing and compensating outputs may be provided in the circuit package 30. In such case, processor 79 can replace or supplement the on-board computer 76. The instrument package 30 and probe assembly are removable and replaceable as a unit.

The leading edge 80 of the strut 12 has a suitable de-icing heater, such as a conventional resistant wire heater 82, embedded therein. Because of the mounting of the probe assembly, and the size of the probe assembly, the overall power needed for de-icing the probe is reduced compared with the power needed to de-ice separate pitot, pitot-static and angle of attack probes. A bore 81 in the strut 12 can be used for mounting a cartridge heater, if desired to supplement or replace the wire heater 82. It should be noted that the angle of vane 54 can have solid state de-icing heaters installed therein, such as the positive temperature coefficient heaters 83 shown in Figure 3.

The leading edge 80 of the strut is shown at substantially a right angle to the skin 16 of the aircraft, but it can be swept rearwardly slightly. The trailing edge also can be inclined, if desired. The shaft 58 has an axis of rotation that is preferably substantially perpendicular to the aircraft skin 16, and preferably perpendicular to the direction of air flow 32.

The angular readout from the resolver 62 used with the vane type angle of attack sensor 52 provides a measurement of local angle of attack, which can be corrected by suitable algorithims, as is well known. Such correction can take place in the memory of processor 79 in instrument package 30, to provide actual angle of attack. Wind tunnel tests can be used for determining the correlation between the local angle of attack as measured, and the actual angle of attack, and provided in a lookup table in the memory of the processor 79 or computer 76, or both.

The angle of attack that is measured by the vane ($AOA_m$) can be corrected to provide the true angle of attack of the probe ($AOA_p$) by providing constants that relate to the configuration of the aircraft and the probe on which the vane is mounted. The general equation is as follows:

$$(1) \quad AOA_p = a(AOA_{m)} + b$$

a and b are constants derived from wind where a tunnel tests, and b is usually equal or very close to 0.

The measurements of pressures on the multi-function probe disclosed also provides for systematic corrections for pitot pressure ($P_t$); static pressure ($P_s$), and total air temperature (TAT). Equations can be expressed as follows:

$$(2) \quad P_t = (f) (P_{tm}/P_{sm}, \ AOA_p)$$

$$(3) \quad P_s = (f) (P_{tm}/P_{sm}, \ AOA_p)$$

$$(4) \quad TAT = (f) (P_{tm}/P_{sm}, \ AOA_p, \ TAT_m)$$

f indicates function of:
$P_t$ = total pressure
$P_{tm}$ = measured total pressure
$P_s$ = local static pressure
$P_{sm}$ = measured static pressure
$AOA_p$ = probe angle of attack (in degrees or radians)
TAT = total air temperature
$TAT_m$ = measured total temperature
$AOA_m$ = measured probe angle

Additionally, angle of attack can be calculated by utilizing the pressures at the ports 51A and 51B, which pressures are individually sensed for providing separate electrical signals. The calculations are carried out in the well known manner that is used where static pressure sensing ports are provided on opposite sides of a cylindrical barrel type probe mounted on a strut. The probe angle is a function of the differential pressures between ports 51A and 51B. Designating the port 51B as $P_1$ and port 51A as $P_2$, the differential pressure is expressed as:

$$(5) \quad dp = p_1 - p_2$$

The angle of attack of the probe is expressed as:

$$(6) \quad dp = (f)\left(\frac{p_{tm}}{p_{sm}}, \frac{dp}{q_{cm}}\right)$$

$$(7) \quad p_{sm} = \frac{p_1 + p_2}{2}$$

where $q_{cm} = P_{tm} - P_{sm}$

The correction or scaling factors to solve the equations can be provided by lookup tables in the processor 79. The necessary scaling factors can be provided by wind tunnel tests for the particular aircraft construction.

Reference is made to U.S. Patent No. 6,543,298, for showing digital corrections for the measured total air temperature.

The multi-function probe includes a total air temperature sensor design that provides accurate total air temperature measurements in a robust probe. The air flow path to chamber 28 provides water and particle droplets separation from the air flowing by the total temperature sensor. The positioning of the temperature sensor in the probe minimizes the de-icing power required, and this minimizes the heating error that may be introduced to total air temperature sensors. The location of the scoop inlet opening for the total air temperature sensor, and the design of the flow passage, insures accurate performance.

The probe assembly 10 is a stand alone probe design, and is easier to service and replace. The pitot tube is maintained in a known position relative to the air stream past the air craft, and it has the ability to accurately measure the pitot pressure.

The incorporation of a vane angle of attack sensor as part of the multi-function probe avoids possible port clogging problems that can occur where only pneumatic signals are used for calculating angle of attack, and provides for high reliability. Angle change dynamic response is also high since the vane is positioned at the outer end of the strut, outside of boundary layer air and other influences caused by the aircraft surface.

The shaft 58 for the angle of attack sensing vane 54 passes through a bore 90 (Figure 3) that is larger in diameter than the shaft. This bore can be filled with a suitable damping fluid 91, such as a viscous oil, if desired. The viscous material will dampen flutter or oscillations of the vane.

The pitot tube 20 remains oriented in a fixed position on the strut. The vane 54 can move without affecting the position of the pitot tube.

Although the present invention has been described with reference to preferred embodiments, workers skilled in the art will recognize that changes may be made in form and detail without departing from the scope of the invention.

**Claims**

1. A multi-function air data sensing probe (10) having:

    a base end mountable to an aircraft (16) to extend laterally outwardly therefrom;
    a pitot port (22) facing upstream relative to air flow (32) past the probe;
    a forwardly facing total temperature sensor inlet scoop (36) formed on the probe, said scoop leading to a flow passageway (34) that changes direction to direct flow into a first chamber (28), a total air temperature sensor (44) in said first chamber, said first chamber having exhaust openings (42) therefrom for permitting air to flow through said chamber;
    separate static pressure ports (50A,50B) on side surfaces of the said probe between the base and the pitot port; and
    pressure sensors (29,53A,53B) connected to separately sense pressures at the pitot port and the static pressure ports;
    and **characterised by**
    an angle of attack sensor vane (54) mounted on said probe so as to be positioned at an outer end thereof and extending outwardly therefrom, said vane being pivotable about an axis generally perpendicular to a surface of the aircraft on which the probe is mounted; and
    a sensor (62) to sense an angular position of the vane relative to a reference;
    and wherein:

said inlet scoop is spaced from the pitot port;

said pitot port is at an end of a tube (20), said tube being mounted on an outer end of said probe and extending upstream beyond the inlet scoop for the total temperature sensor; and

said probe includes a strut (12) between the base on the tube having the pitot port, a generally airfoil shape cross section, and wherein the static pressure sensing ports are on upper and lower sides of the strut.

2.   The multifunction air data sensing probe of-claim 1, wherein the vane is pivotably mounted to an aft section of the outer end of the probe behind the tube providing the pitot port.

3.   The multi-function air data sensing probe of Claim 1 or 2, wherein said inlet scoop directs flow over a surface of a wall (38) having a plurality of openings (37) therethrough for bleeding boundary layer air through the openings to remove said boundary layer air prior to the flow entering the first chamber.

4.   The multi-function air data sensing probe of any one of Claims 1 to 3, further comprising a processor (79) including lookup tables for compensation of measured angle of attack, pitot pressure, and static pressure to provide corrected angle of attack and pressure signals.

5.   The multi-function air data sensing probe of Claim 4, wherein the processor is mounted in an instrument housing directly attached to a mounting plate (14) for the probe.

6.   An aircraft comprising the multi-function air data sensing probe of any preceding claim.


**Patentansprüche**

1.   Multifunktions-Luftdatensonde (10), welche Folgendes aufweist:

ein Fußende, welches an einem Luftfahrzeug (16) befestigbar ist, um sich seitlich nach außen von diesem zu erstrecken;

einen Pitot-Anschluss (22), welcher relativ zu der Luftströmung (32) an der Sonde bzw. dem Messfühler vorbei stromaufwärts zeigt;

eine nach vorne zeigende Gesamttemperatur-Sensoreinlasshutze (36), welche auf der Sonde ausgebildet ist, wobei die Lufthutze zu einem Strömungskorridor bzw. -durchgang (34) führt, welcher die Richtung ändert, um die Strömung in eine erste Kammer (28) zu lenken, einen Gesamtluft-Temperatursensor (44) in einer ersten Kammer, wobei die erste Kammer Auslassöffnungen (42) aufweist, um eine Strömung der Luft durch die Kammer zu ermöglichen;

separate statische Druckanschlüsse (50A, 50B) auf Seitenflächen des Messfühlers zwischen dem Fuß und dem Pitot-Anschluss; und

Drucksensoren (29, 53A, 53B), welche mit separaten Messdrücken an dem Pitot-Anschluss und den statischen Druckanschlüssen verbunden sind;

und wobei die Multifunktions-Luftdatensonde **gekennzeichnet ist durch**:

einen Sensor-Windflügel (54) für den Anstellwinkel, welcher auf der Sonde derart befestigt ist, dass er an einem äußeren Ende dieser positioniert ist und sich von dieser nach außen erstreckt, wobei der Windflügel um eine Achse schwenkbar ist, die im Allgemeinen senkrecht zu einer Oberfläche des Flugzeugs, auf welcher die Sonde befestigt ist, liegt; und

einen Sensor (62) zum Messen einer Winkelposition des Windflügels mit Bezug auf eine Referenzgröße; und wobei:

die Einlasshutze von dem Pitot-Anschluss beabstandet ist;

der Pitot-Anschluss sich an einem Ende eines Rohrs (20) befindet, wobei das Rohr auf einem äußeren Ende der Sonde angebracht ist und sich stromaufwärts über die Einlasshutze hinaus für den Gesamttemperatursensor erstreckt; und

die Sonde eine Abstützung (12) zwischen dem Fuß auf dem Rohr mit dem Pitot-Anschluss aufweist, einen Querschnitt im Allgemeinen eines Tragflächenprofils, und wobei sich die Messanschlüsse für den statischen Druck auf oberen und unteren Seiten der Abstützung befinden.

2.   Multifunktions-Luftdatensonde nach Anspruch 1, **dadurch gekennzeichnet, dass** der Windflügel an einem hinteren Abschnitt des äußeren Endes der Sonde hinter dem den Pitot-Anschluss bereitstellenden Rohr schwenkbar gelagert ist.

3. Multifunktions-Luftdatensonde nach Anspruch 1 oder 2, **dadurch gekennzeichnet, dass** die Einlasshutze eine Strömung über eine Oberfläche einer Wand (38) mit einer Vielzahl von Durchgangsöffnungen (37) zur Entlüftung von Grenzschichtenluft durch die Öffnungen lenkt, um die Grenzschichtenluft zu beseitigen, bevor die Strömung in die erste Kammer gelangt bzw. eintritt.

4. Multifunktions-Luftdatensonde nach einem der Ansprüche 1 bis 3, welche des Weiteren einen Prozessor (79) aufweist, der Nachschlagetabellen zur Kompensation eines gemessenen Anstellwinkels, eines Stau- bzw. Pitotdrucks und eines statischen Drucks zur Bereitstellung korrigierter Anstellwinkel- und Drucksignale einschließt.

5. Multifunktions-Luftdatensonde nach Anspruch 4, **dadurch gekennzeichnet, dass** der Prozessor in einem Instrumentengehäuse gelagert ist, welches direkt an einer Befestigungsplatte (14) für die Sonde angebracht ist.

6. Luftfahrzeug, welches die Multifunktions-Luftdatensonde nach einem der vorhergehenden Ansprüche aufweist.

## Revendications

1. Sonde multifonctionnelle (10) pour la détection de données aérodynamiques ayant :

une extrémité de base susceptible d'être montée sur un aéronef (16) pour s'étendre latéralement vers l'extérieur à partir de celui-ci ;
un orifice Pitot (22) regardant en amont par rapport à un écoulement d'air (32) dépassant la sonde ;
une buse d'admission (36) de capteur de température totale d'air regardant vers l'avant formée sur la sonde, ladite buse menant à un passage d'écoulement (34) qui change de direction pour orienter l'écoulement dans une première chambre (28), un capteur (44) de température totale d'air dans ladite première chambre, ladite première chambre ayant des ouvertures d'échappement (42) à partir de celle-ci pour permettre à l'air de s'écouler à travers ladite chambre ;
des orifices (50A, 50B) de pression statique séparés sur des surfaces latérales de ladite sonde ente la base et l'orifice Pitot ; et
des capteurs de pression (29, 53A, 53B) reliés pour détecter séparément des pressions au niveau de l'orifice Pitot et les orifices de pression statique ;
et **caractérisé par**
un déflecteur (54) de capteur d'angle d'attaque monté sur ladite sonde de sorte à être positionné à son extrémité externe et à s'étendre vers l'extérieur depuis celle-ci, ledit déflecteur pouvant pivoter autour d'un axe globalement perpendiculaire à une surface de l'aéronef sur laquelle la sonde est montée ; et
un capteur (62) pour détecter une position angulaire du déflecteur par rapport à une référence ;
et où :

ladite buse d'admission est séparée de l'orifice Pitot ;
ledit orifice Pitot se trouve à une extrémité d'un tube (20), ledit tube étant monté sur une extrémité externe de ladite sonde et s'étendant en amont au-delà de la buse d'admission pour le capteur de température totale ; et
ladite sonde comporte un mât de liaison (12) entre la base sur le tube ayant l'orifice Pitot, une coupe transversale globalement sous forme de profil aérodynamique, et où les orifices détectant la pression statique se trouvent sur des côtés supérieur et inférieur du mât de liaison.

2. Sonde multifonctionnelle pour la détection de données aérodynamiques de la revendication 1, dans laquelle le déflecteur est monté en pivotement sur une section arrière de l'extrémité externe de la sonde derrière le tube fournissant l'orifice Pitot.

3. Sonde multifonctionnelle pour la détection de données aérodynamiques de la revendication 1 ou 2, dans laquelle ladite buse d'admission dirige l'écoulement sur une surface d'une paroi (38) ayant plusieurs ouvertures (37) à travers pour purger l'air de couche limite à travers les ouvertures afin de retirer ledit air de couche limite avant d'introduire l'écoulement dans la première chambre.

**4.** Sonde multifonctionnelle pour la détection de données aérodynamiques de l'une quelconque des revendications 1 à 3, comprenant en outre un processeur (79) comportant des tables de conversion pour la compensation d'un angle d'attaque, d'une pression Pitot, et d'une pression statique mesurés afin de fournir un angle d'attaque et des signaux de pression corrigés.

**5.** Sonde multifonctionnelle pour la détection de données aérodynamiques de la revendication 4, dans laquelle le processeur est monté dans un boîtier d'instrument directement fixé à une plaque de montage (14) pour la sonde.

**6.** Aéronef comprenant la sonde multifonctionnelle pour la détection de données aérodynamiques de l'une des revendications précédentes.

Fig. 1

*Fig. 2*

AIRCRAFT CONTROLS

COMPUTER

AOA

PROCESSOR

54
52
83
10
18 26
56
25 20 24 27
22 60
34
36 42
37 44B
38 90
39 26 91
81 60
12 44 14 16
80
82 28
53A
44D
PRESSURE SENSOR
PRESSURE SENSOR — 53B
TAT CIRCUIT
PITOT PRESSURE SENSOR 45
62
29
ANGLE
RESOLVER
CIRCUIT
79 70
PROCESSOR

*Fig. 3*

Fig. 4

PRESSURE
SENSOR — 53A

PRESSURE
SENSOR — 53B

*Fig. 5*

Fig. 6

**EP 1 491 900 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5731507 A
- US 20030051546 A
- US 3882721 A
- US 6543298 B